# EUROPÄISCHE PATENTSCHRIFT

(11) **EP 3 997 365 B1**
(45) Veröffentlichungstag und Bekanntmachung des Hinweises auf die Patenterteilung: **02.08.2023**
(21) Anmeldenummer: 20735093.5
(22) Anmeldetag: 18.06.2020
(51) Int. Cl.: F01D 9/02, F16J 15/08, F01D 11/00

(54) **HOCHTEMPERATURDICHTUNG MIT KLEMMPROFIL**
HIGH TEMPERATURE SEAL WITH CLAMPING PROFILE
JOINT D'ÉTANCHÉITÉ HAUTE TEMPÉRATURE POURVU DE PROFIL DE SERRAGE

(30) Priorität: 02.10.2019 EP 19201100
(43) Veröffentlichungstag der Anmeldung: 18.05.2022
(73) Patentinhaber: Siemens Energy Global GmbH & Co. KG, 81739 München (DE)
(72) Erfinder: GRALKI, Matthias, 45478 Mülheim an der Ruhr (DE); KRUSCH, Claus, 45257 Essen (DE); SCHMIDT, Daniel, 45472 Mülheim an der Ruhr (DE)
(86) Internationale Anmeldenummer: PCT/EP2020/066847
(87) Internationale Veröffentlichungsnummer: WO 2021/063552

(56) Entgegenhaltungen:
- EP-A1- 3 023 599
- EP-A1- 3 045 783
- FR-A1- 3 055 663

## Beschreibung

Die Erfindung betrifft eine Dichtung zur Abdichtung eines Spaltes zwischen zwei Bauteilen einer Verbrennungsanordnung bei einer Gasturbine.

Besondere Herausforderung bei entsprechender Abdichtung sind die hohen Temperaturen sowie im Betrieb der Gasturbine auftretenden Verschiebungen der zueinander benachbarten Bauteile sowie die vielfach auftretenden Vibrationen.

Aus dem Stand der Technik sind hierzu verschiedene Ausführungsformen von Dichtungen, häufig auch als "side-seal" benannt, bekannt, welche zur Abdichtung eines Spaltes zwischen den Flanschen von zwei benachbarten Heißgaskanälen eingesetzt werden. Die Heißgaskanäle weisen im Flansch jeweils eine gegenüberliegende Dichtungsnut auf, in denen die Dichtung eingreift. Die Dichtung hierzu besteht vielfach aus einem flachen Metallstreifen, welcher mittels verschiedener Maßnahmen einerseits in der Position verbleiben und andererseits die auftretenden Vibrationen abfangen soll. Hierzu sind Ausführungen bekannt, bei dem ein Flachstahl mit einem Metallgewebe überzogen ist. Andererseits sind Ausführungen bekannt, bei denen der Flachstahl profiliert bzw. gewellt ist.

Trotz aller Bemühungen eine möglichst hohe Lebensdauer zu erreichen bleibt die Dichtung ein Verschleißteil und bestimmt mitunter das Intervall zur notwendigen Wartung der Verbrennungsanordnung.

EP 3045783 offenbart eine Dichtung umfassend ein Winkelprofil mit einer L-förmigen Gestalt mit einer Eingriffsflanke und mit einer Dichtflanke; und ein Klammerprofil mit einem gebogenen Klemmabschnitt.

Aufgaben der vorliegenden Erfindung ist es somit eine Dichtung zur Anwendung in einer Verbrennungsanordnung mit einer höheren Lebensdauer zu entwickeln.

Die gestellte Aufgabe wird durch eine erfindungsgemäße Ausführungsform einer Dichtung nach der Lehre des Anspruchs 1 gelöst. Eine erfindungsgemäße Verbrennungsanordnung ist im Anspruch 7 angegeben. Vorteilhafte Ausführungsformen sind Gegenstand der Unteransprüche.

Die gattungsgemäße Dichtung dient zunächst mal zur Abdichtung eines Spaltes in einer Hochtemperaturanwendung. Hierbei ist die Dichtung insbesondere geeignet zur Verwendung in einer Verbrennungsanordnung einer Gasturbine. Die Dichtung weist eine Heißseite und eine gegenüberliegende Kaltseite auf. Bei entsprechender Anwendung in einer Verbrennungsanordnung ist die Betriebstemperatur auf der Heißseite entsprechend höher als auf der Kaltseite. Weiterhin weist die Dichtung eine linke Seite und eine rechte Seite auf.

Die neuartige Dichtung wird gekennzeichnet durch eine zweiteilige Ausführungsform mit einem Winkelprofil und einem daran befestigten Klammerprofil, welche sich beide als Dichtung entlang des Spaltes erstrecken.

Das Winkelprofil weist hierbei eine L-förmige Gestalt auf. Dabei erstreckt sich eine linke Eingriffsflanke ausgehend von der linken Winkelecke des Winkelprofils zur linken Seite. Bestimmungsgemäß greift die linke Eingriffsflanke in eine linke Dichtungsnut neben dem Spalt ein. Weiterhin weist das Winkelprofil, im Wesentlichen quer zur linken Eingriffsflanke erstreckend, eine linke Dichtflanke auf. Hierbei erstreckt sich die Dichtflanke ausgehend von der linken Winkelecke zur Kaltseite.

Das Klammerprofil hat zunächst eine analoge Formgebung mit einer rechten Eingriffsflanke, welche sich ausgehend von einer rechten Winkelecke zur rechten Seite erstreckt. Die rechte Eingriffsflanke greift hierbei analog bestimmungsgemäß in eine rechte Dichtungsnut gegenüberliegend zur rechten Dichtungsnut ein. Ebenso weist das Klammerprofil eine rechte Dichtflanke auf, welche sich von der rechten Winkelecke in Richtung der Kaltseite erstreckt und hierbei flächig an der linken Dichtflanke anliegt. Weiterhin weist das Klammerprofil einen Halteabschnitt auf, welcher gegenüberliegend zur rechten Dichtflanke gleichfalls an der linken Dichtflanke anliegt. Dabei wird die linke Dichtflanke zwischen dem Halteabschnitt und der rechten Dichtflanke eingeklemmt. Die Verbindung von der rechten Dichtflanke zum Halteabschnitt und entsprechend die Klemmwirkung wird von einem Klemmabschnitt bewirkt. Naheliegend befindet sich der Klemmabschnitt auf der Kaltseite.

Durch die neu geschaffene Ausführungsform wird eine bessere Anpassung an die Positionen der gegenüberliegenden Dichtungsnuten, insbesondere bei einer Veränderung der Position im laufenden Betrieb geschaffen. Dies führt dazu, dass - insbesondere aufgrund des zusätzlichen Freiheitsgrades - eine geringere Verformung der Dichtung auftritt und hierdurch wiederum die Schädigung aufgrund von Vibrationen bei den hohen Temperaturen geringer ausfällt.

Hinsichtlich der Gestaltung der Dichtung mit dem Winkelprofil und dem Klammerprofil ist es vorteilhaft, wenn die Breite der linken Dichtflanke gemessen in der Richtung von der Heißseite zur Kaltseite größer ist als die Breite der rechten Dichtflanke. Gleichfalls ist es vorteilhaft, wenn die Breite der linken Dichtflanke ebenso größer ist als die Breite des Halteabschnitts.

Weiterhin ist es vorteilhaft, wenn die Breite der rechten Dichtflanke größer ist als die Breite des linken Eingriffsabschnitts ist, dessen Breite gemessen wird von der linken Seite zur rechten Seite. Gleichfalls ist es vorteilhaft, wenn die Breite des Halteabschnitts größer ist als die Breite des linken Eingriffsabschnitts. Dieses gilt analog für den rechten Eingriffsabschnitt, dessen Breite vorteilhaft geringer ist als die Breite der rechten Dichtflanke sowie die Breite des Halteabschnitts.

Unter Berücksichtigung der gewünschten Klemmwirkung mittels des Klemmabschnitts sowie der vielfach vorzufinden Bauraumbeschränkungen ist es weiterhin vorteilhaft, wenn die Weite des Klemmabschnitts gemessen in der Richtung von der linken Seite zur rechten Seite zumindest dem 1,5-fachen und höchstens dem 3,5-fachen der Summe aus der Stärke der linken Dichtflanke plus der Stärke der rechten Dichtflanke beträgt. Besonders vorteilhaft ist es hierbei, wenn die Weite des Klemmabschnitts zumindest der 2-fachen Stärke der beiden Dichtflanken beträgt. Weiterhin ist es besonders vorteilhaft, wenn die Weite des Klemmabschnitts höchstens der 3-fachen Stärke der beiden Dichtflanken beträgt.

Eine vorteilhafte Gestaltung des Halteabschnitts ist gegeben, wenn dieser einen Abschnitt größerer Stärke auf der Kaltseite und einen Abschnitt geringerer Stärke auf der Heißseite aufweist. Dabei weisen beide einzelnen Abschnitte eine Breite, betrachtet in einer Richtung von der Heißseite zur Kaltseite, von zumindest der 0,3-fachen Breite des Halteabschnitts auf. Hierbei beträgt die Biegesteifigkeit des Abschnitts größerer Stärke zumindest das 2-fache der Biegesteifigkeit des Abschnitts geringerer Stärke.

Der Klemmabschnitt kann in einer ersten einfachen Ausführungsform entlang des Spaltes bzw. der Dichtung durchgehend ausgeführt sein. Vorteilhaft ist es jedoch, wenn der Klemmabschnitt entlang des Spaltes mehrfach unterbrochen wird und somit eine Mehrzahl an Klammerstücken mit zwischenliegendem Freiraum aufweist.

Insbesondere hinsichtlich der Gestaltung und Fertigung der Dichtungsnuten ist vorteilhaft, wenn die Stärke der linken Eingriffsflanke der Stärke der rechten Eingriffsflanke entspricht. Weiterhin ist es zur Erzielung einer hohen Lebensdauer vorteilhaft, wenn die linke Dichtflanke eine mit der rechten Dichtflanke übereinstimmende Stärke aufweist. Hinsichtlich der Herstellung ist es weiterhin vorteilhaft, wenn die Stärke der linken Eingriffsflanke der Stärke der linken Dichtflanke entspricht. Analog ist es vorteilhaft, wenn die Stärke der rechten Eingriffsflanke der Stärke der rechten Dichtflanke entspricht. Dazu ist es weiterhin vorteilhaft, wenn die Stärke des Klemmabschnitts der Stärke der rechten Dichtflanke entspricht. Weiterhin ist es vorteilhaft, wenn der Abschnitt größerer Stärke des Halteabschnitts eine mit dem Klemmabschnitt übereinstimmende Stärke aufweist.

Ausgehend von der neuartigen erfindungsgemäßen Dichtung wird die Bildung einer erfindungsgemäßen Verbrennungsanordnung ermöglicht. Diese weist hierbei zumindest einen linken Heißgaskanal sowie einen rechten Heizgaskanal auf. Die beiden Heißgaskanäle sind benachbarte zueinander angeordnet und dienen jeweils zur Leitung eines heißen Verbrennungsgase. Mittels einer Dichtung wie zuvor beschrieben wird der sich zwischen den benachbarten Heißgaskanälen befindende Spalt abgedichtet. Hierzu weisen die Heißgaskanäle jeweils eine sich gegenüberliegende Dichtungsnut auf. In die linke Dichtungsnut greift entsprechend der linke Eingriffsabschnitt und in die rechte Dichtungsnut greift der rechte Eingriffsabschnitt ein.

Dabei ist es vorteilhaft, wenn der Abstand vom Nutgrund der rechten Dichtungsnut bis zum Nutgrund der linken Dichtungsnut zumindest dem 1,1-fachen und höchstens dem 1,5-fachen der Breite der Dichtung beträgt.

Weiterhin ist es vorteilhaft, wenn die Weite der linken respektive der Dichtungsnut zumindest dem 1,05-fachen und maximal dem 1,2-fachen der Stärke der linken Eingriffsflanke respektive der rechten Eingriffsflanke entspricht.

In den nachfolgenden Figuren wird eine beispielhafte Ausführungsform für eine erfindungsgemäße Dichtung sowie eine Verbrennungsanordnung skizziert. Es zeigen:
- Fig. 1: eine perspektivische Anordnung auf eine beispielhafte Ausführungsform einer Dichtung;
- Fig. 2: eine Detailansicht zur Figur 1;
- Fig. 3: eine Verbrennungsanordnung zur Verwendung der Dichtung aus Figur 1;
- Fig. 4: ein Querschnitt durch die Verbrennungsanordnung mit der Dichtung aus Figur 1.

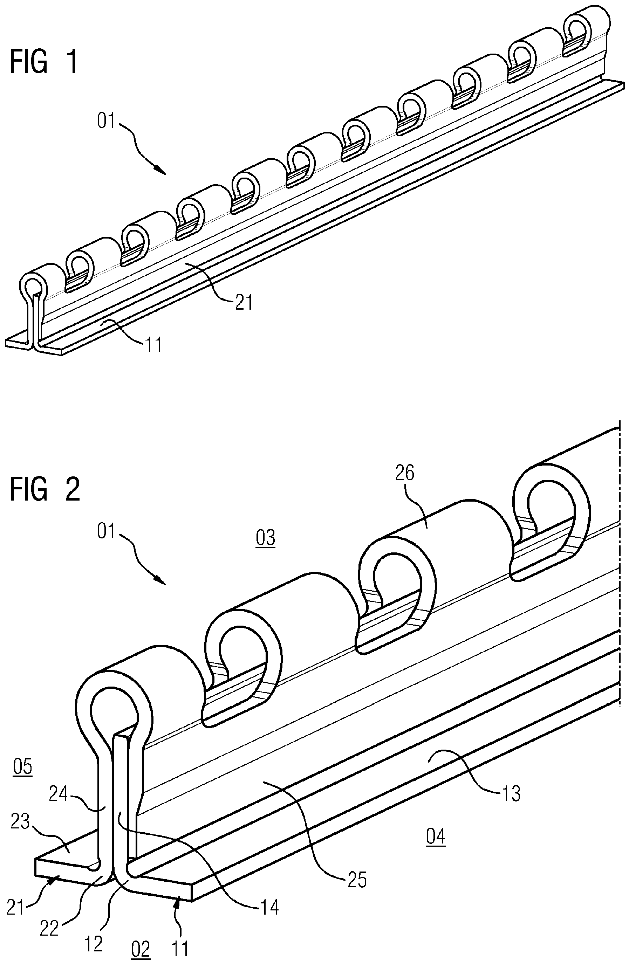

In der Figur 1 wird eine beispielhafte Ausführungsform für eine Dichtung 01 skizziert, welche gebildet wird von einem Winkelprofil 11 sowie einem Klemmprofil 21.

Hierzu zeigt die Figur 2 im Detail das Ende der Dichtung 01 aus Figur 1. Zu erkennen ist zunächst mal auf rechter Seite das Winkelprofil 11, welches 11 - wie offensichtlich - eine L-förmige Gestalt aufweist. Dabei erstreckt sich eine linke Eingriffsflanke 13 ausgehend von der linken Winkelecke 12 zu einer linken Seite 04. Weiterhin erstreckt sich von der linken Winkelecke 12 ausgehend eine linke Dichtflanke 14 zu einer Kaltseite 03. Gegenüberliegend der Kaltseite 03 befindet sich die Heißseite 02 und gegenüberliegend der linken Seite 04 befindet sich die rechte Seite 05. Zur vorteilhaften Herstellung des Winkelprofils 11 weist die linke Eingriffsflanke 13 die gleiche Materialstärke wie die linke Dichtflanke 14 auf.

Das zweite Bauteil der Dichtung 01 wird gebildet vom Klammerprofil 21. Dieses 21 umfasst analog eine rechte Eingriffsflanke 23, welche 23 sich ausgehend von einer rechten Winkelecke 22 zur rechten Seite 05 erstreckt. Weiterhin erstreckt sich analog ausgehend von der rechten Winkelecke 22 eine rechte Dichtflanke 24 zur Kaltseite 03. Dabei liegt die rechte Dichtflanke 24 flächig an der linken Dichtflanke 14 an. Gleichfalls weist zur vorteilhaften Herstellung die rechte Dichtflanke 24 die gleiche Materialstärke wie die rechte Eingriffsflanke 23 auf.

Gegenüberliegend der rechten Dichtflanke 24 ebenso an der linken Dichtflanke 14 anliegend befindet sich ein Halteabschnitt 25. Der Halteabschnitt 25 umfasst hierbei wiederum einem Abschnitt größerer Stärke auf der Kaltseite 03 liegend und einem Abschnitt geringerer Stärke auf der Heißseite 02 liegend.

Der Halteabschnitt 25 ist mit der rechten Dichtflanke 24 mittels eines Klammerabschnitts 26 verbunden. Der Klammerabschnitt 26 befindet sich hierbei naheliegend auf der Kaltseite 03 und weist eine bogenförmige Gestalt auf. Wie zu erkennen ist, ist vorgesehen, dass der Klammerabschnitt 26 nicht durchgehend ausgeführt ist, sondern sich unterteilt in eine Mehrzahl von Klammerstücke, welche jeweils durch einen Freiraum voneinander getrennt sind. Weiterhin ist zu erkennen, dass der Klammerabschnitt 26 die gleiche Materialstärke wie die rechte Dichtflanke 24 sowie die gleiche Materialstärke wie der Abschnitt größerer Stärke des Halteabschnitt 25 aufweist.

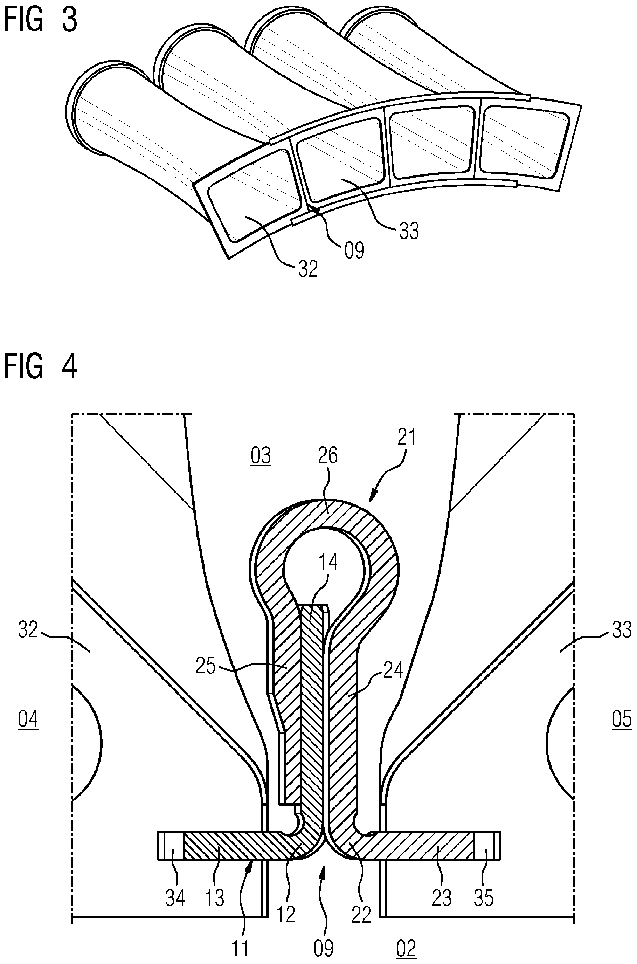

In der Figur 3 wird exemplarisch ein Abschnitt einer Verbrennungsanordnung skizziert, welche ein linkes Flammenrohr 32 sowie ein rechtes Flammenrohr 33 umfasst. Diese 32, 33 sind hierbei benachbarte zueinander angeordnet und bilden zwischen einem angrenzenden Flansch einen Spalt 09, welchen 09 es abzudichten gilt.

Hierzu skizziert die Figur 4 im Querschnitt die Anordnung der Dichtung 01 im Spalt 09 zwischen den Flammenrohren 32, 33.zu erkennen ist wiederum das Winkelprofil 11 mit der linken Angriffsfläche 13 und der linken Dichtflanke 14.weiterhin ist zu erkennen, dass die linke Eingriffsflanke 13 in einer linken Dichtungsnut 34 des linken Flammenrohrs 32 aufgenommen ist. Analog weist das Klammerprofil 21 die rechte Eingriffsflanke 23 auf, welche 23 in eine rechte Dichtungsnut 35 des rechten Flammenrohr 33 eingreift. Die rechte Dichtflanke 24 liegt hierbei flächig an der linken Dichtflanke 14 an. An die rechte Dichtflanke 24 schließlich der Klammerabschnitt 26 in bogenförmige Gestalt an, und die Verbindung zum Halteabschnitt 25 herstellt, der 25 gegenüberliegend zur rechten Dichtflanke 24 an der linken Dichtflanke 14 anliegend.

Somit ist einerseits die Abdichtung zwischen der linken Eingriffsflanke 13 und dem linken Flammenrohr 32 mit der linken Dichtungsnut 34, analog die Abdichtung zwischen der rechten Eingriffsflanke 23 und dem rechten Flammenrohr 33 mit der rechten Dichtungsnut 35 und andererseits die Abdichtung mit der rechten Dichtflanke 24 und der linken Dichtflanke 14 gegeben.

## Patentansprüche

1. Dichtung (01) zur Abdichtung eines Spaltes (09) in einer Hochtemperaturanwendung, insbesondere zur Verwendung in einem Verbrennungsanordnung einer Gasturbine, mit einer Heißseite (02) und einer gegenüberliegenden Kaltseite (03) und einer linken Seite (04) und einer gegenüberliegenden rechten Seite (05), umfassend
- ein Winkelprofil (11) mit einer L-förmigen Gestalt mit einer sich von einer linken Winkelecke (12) zur linken Seite (04) erstreckenden linken Eingriffsflanke (13) und mit einer sich von der linken Winkelecke (12) zur Kaltseite (03) erstreckenden linken Dichtflanke (14); und
- ein Klammerprofil (21) mit einer sich von einer rechten Winkelecke (22) zur rechten Seite (05) erstreckenden rechten Eingriffsflanke (23) und mit einer sich von der rechten Winkelecke (22) zur Kaltseite (03) erstreckenden an der linken Dichtflanke (14) anliegenden rechten Dichtflanke (24) und mit einem an der linken Dichtflanke (14) gegenüber zur rechten Dichtflanke (24) anliegenden Halteabschnitt (25) und mit einem gebogenen die rechte Dichtflanke (24) mit dem Halteabschnitt (25) verbindenden Klemmabschnitt (26).

2. Dichtung (01) nach Anspruch 1,
**dadurch gekennzeichnet,**
**dass** die Breite der linken Dichtflanke (14) größer als die Breite der rechten Dichtflanke (24) sowie die Breite des Halteabschnitt (25) ist; und/oder
**dass** die Breite der rechten Dichtflanke (24) sowie die Breite des Halteabschnitts (25) größer als die Breite des linken Eingriffsabschnitts (13) sowie des rechten Eingriffsabschnitts (23) ist.

3. Dichtung (01) nach Anspruch 1 oder 2,
**dadurch gekennzeichnet,**
**dass** die Weite des Klemmabschnitts (26) zumindest dem 1,5-fachen, insbesondere zumindest dem 2-fachen, und höchstens dem 3,5-fachen, insbesondere höchsten dem 3-fachen, der Stärke der linken Dichtflanke (14) plus der Stärke der rechten Dichtflanke (24) beträgt.

4. Dichtung (01) nach einem der Ansprüche 1 bis 3,
**dadurch gekennzeichnet,**
**dass** der Halteabschnitt (25) einen stärkeren Abschnitt größerer Stärke und einen dünneren Abschnitt geringer Stärke aufweist, wobei der stärkere Abschnitt sowie der dünnere Abschnitt jeweils eine Breite von zumindest dem 0,3-fachen der Breite des Halteabschnitts (25) aufweist, und wobei die Biegesteifigkeit des stärkeren Abschnitts zumindest dem 2-fachen der Biegesteifigkeit des dünneren Abschnitts beträgt.

5. Dichtung (01) nach einem der Ansprüche 1 bis 4,
**dadurch gekennzeichnet,**
**dass** der Klemmabschnitt (26) entlang des Spaltes (09) unterteilt ist in eine Mehrzahl an Klammerstücken mit jeweils zwischenliegendem Freiraum.

6. Dichtung (01) nach einem der Ansprüche 1 bis 5,
**dadurch gekennzeichnet,**
**dass** die Stärke der linken Eingriffsflanke (13) der Stärke der rechten Eingriffsflanke (23) entspricht; und/oder
**dass** die Stärke der linken Dichtflanke (13) der Stärke der rechten Dichtflanke (23) entspricht; und/oder
**dass** die Stärke des Klemmabschnitts (26) der Stärke der rechten Dichtflanke (24) entspricht; und/oder
**dass** die Stärke des stärkeren Abschnitts des Halteabschnitts (25) der Stärke des Klemmabschnitts (26) entspricht.

7. Verbrennungsanordnung mit einem linken Heißgaskanal (32) und einem rechten Heißgaskanal (33), welche (32, 33) jeweils ein heißes Verbrennungsgas leiten, wobei die Heißgaskanäle (32, 33) benachbart zueinander angeordnet sind mit einem zwischenliegenden Spalt (09) und eine rechte respektive eine linke Dichtungsnut (34, 35) einander gegenüberliegend aufweisen, wobei im Spalt (09) eine Dichtung (01) nach einer der vorhergehenden Ansprüche angeordnet ist, welche (01) in die gegenüberliegenden Dichtungsnuten (34, 35) eingreift.

8. Verbrennungsanordnung nach Anspruch 7,
**dadurch gekennzeichnet,**
**dass** der Abstand der gegenüberliegenden Nutgründe der Dichtungsnuten (34, 35) zumindest dem 1,1-fachen und höchstens dem 1,5-fachen der Breite der Dichtung (01) beträgt.

9. Verbrennungsanordnung nach Anspruch 7 oder 8,
**dadurch gekennzeichnet,**
**dass** die Weite der linken und der rechten Dichtungsnut (34, 35) zumindest dem 1,05-fachen und maximal dem 1,2-fachen der Stärke der linken Eingriffsflanke (13) respektive der rechten Eingriffsflanke (23) beträgt.

## Claims

1. Seal (01) for sealing a gap (09) in a high-temperature application, in particular for use in a combustion arrangement of a gas turbine, having a hot side (02) and an opposite cold side (03), and a left side (04) and an opposite right side (05), comprising
- an angle profile (11) having an L-shaped configuration with a left engagement flank (13) extending from a left angle corner (12) to the left side (04) and with a left sealing flank (14) extending from the left angle corner (12) to the cold side (03); and
- a clamping profile (21) with a right engagement flank (23) extending from a right angle corner (22) to the right side (05) and with a right sealing flank (24) extending from the right angle corner (22) to the cold side (03) and lying against the left sealing flank (14), and with a holding portion (25) lying against the left sealing flank (14) opposite the right sealing flank (24), and with a curved clamping portion (26) connecting the right sealing flank (24) to the holding portion (25).

2. Seal (01) according to Claim 1,
**characterized**
**in that** the width of the left sealing flank (14) is greater than the width of the right sealing flank (24) and the width of the holding portion (25); and/or
**in that** the width of the right sealing flank (24) and the width of the holding portion (25) is greater than the width of the left engagement portion (13) and of the right engagement portion (23).

3. Seal (01) according to Claim 1 or 2,
**characterized**
**in that** the breadth of the clamping portion (26) is at least 1.5 times, in particular at least 2 times, and at most 3.5 times, in particular at most 3 times, the thickness of the left sealing flank (14) plus the thickness of the right sealing flank (24).

4. Seal (01) according to one of Claims 1 to 3,
**characterized**
**in that** the holding portion (25) has a thicker portion of greater thickness and a thinner portion of lesser thickness, wherein the thicker portion and the thinner portion each have a width of at least 0.3 times the width of the holding portion (25), and wherein the flexural rigidity of the thicker portion is at least 2 times the flexural rigidity of the thinner portion.

5. Seal (01) according to one of Claims 1 to 4,
**characterized**
**in that** the clamping portion (26) is divided along the gap (09) into a plurality of clamping sections with a clearance in each case in between.

6. Seal (01) according to one of Claims 1 to 5,
**characterized**
**in that** the thickness of the left engagement flank (13) corresponds to the thickness of the right engagement flank (23); and/or
**in that** the thickness of the left sealing flank (13) corresponds to the thickness of the right sealing flank (23); and/or
**in that** the thickness of the clamping portion (26) corresponds to the thickness of the right sealing flank (24); and/or
**in that** the thickness of the thicker portion of the holding portion (25) corresponds to the thickness of the clamping portion (26).

7. Combustion arrangement having a left hot gas channel (32) and a right hot gas channel (33), which hot gas channels (32, 33) each conduct a hot combustion gas, wherein the hot gas channels (32, 33) are arranged adjacent to each other with a gap (09) in between and have a right and a left sealing groove (34, 35), respectively, opposite each other, wherein a seal (01) according to one of the preceding claims is arranged in the gap (09), said seal (01) engaging in the opposite sealing grooves (34, 35).

8. Combustion arrangement according to Claim 7,
**characterized**
**in that** the distance between the opposite groove bases of the sealing grooves (34, 35) is at least 1.1 times and at most 1.5 times the width of the seal (01).

9. Combustion arrangement according to Claim 7 or 8,
**characterized**
**in that** the breadth of the left and the right sealing groove (34, 35) is at least 1.05 times and at maximum 1.2 times the thickness of the left engagement flank (13) and of the right engagement flank (23), respectively.

## Revendications

1. Joint (01) d'étanchéité pour rendre étanche un intervalle (09) dans une application à haute température, à utiliser en particulier dans un système de combustion d'une turbine à gaz, comprenant un côté (02) chaud et un côté (03) froid opposé et un côté (04) gauche et un côté (05) droit opposé, comprenant
- une cornière (11) ayant une conformation en forme de L ayant un flanc (13) gauche de pénétration, s'étendant d'un coude (12) gauche au côté (04) gauche, et ayant un flanc (14) gauche d'étanchéité, s'étendant du coude (12) gauche au côté (03) froid ; et
- un profil (21) de crampon ayant un flanc (23) droit de pénétration, s'étendant d'un coude (22) droit au côté (05) droit et ayant un flanc (24) droit d'étanchéité, s'étendant du coude (22) droit au côté (03) froid en s'appliquant au flanc (14) gauche d'étanchéité, et ayant une partie (25) de maintien s'appliquant au flanc (14) gauche d'étanchéité, en face du flanc (24) droit d'étanchéité, et ayant une partie (26) de serrage incurvée reliant le flanc (24) droit d'étanchéité à la partie (25) de maintien.

2. Joint (01) d'étanchéité suivant la revendication 1,
**caractérisé**
**en ce que** la largeur du flanc (14) gauche d'étanchéité est plus grande que la largeur du flanc (24) droit d'étanchéité ainsi que la largeur de la partie (25) de maintien ; et/ou en ce que la largeur du flanc (24) droit d'étanchéité ainsi que la largeur de la partie (25) de maintien est plus grande que la largeur du flanc (13) gauche de pénétration ainsi que de la partie (23) droite de pénétration.

3. Joint (01) d'étanchéité suivant la revendication 1 ou 2,
**caractérisé**
**en ce que** la grandeur de la partie (26) de serrage représente au moins 1,5 fois, en particulier au moins 2 fois, et au plus 3,5 fois, en particulier au plus 3 fois, l'épaisseur du flanc (14) gauche d'étanchéité plus l'épaisseur du flanc (24) droit d'étanchéité.

4. Joint (01) d'étanchéité suivant l'une des revendications 1 à 3,
**caractérisé**
**en ce que** la partie (25) de maintien a une partie plus épaisse de plus grande épaisseur et une partie plus mince de plus petite épaisseur, dans lequel la partie de plus grande épaisseur ainsi que la partie plus mince ont chacune une largeur représentant au moins 0,3 fois la largeur de la partie (25) de maintien, et dans lequel la rigidité à la flexion de la partie la plus épaisse représente au moins 2 fois la rigidité à la flexion de la partie la plus mince.

5. Joint (01) d'étanchéité suivant l'une des revendications 1 à 4,
**caractérisé**
**en ce que** la partie (26) de serrage est subdivisée le long de la fente (09) en une pluralité de pièces de crampon avec respectivement un espace libre entre elles.

6. Joint (01) d'étanchéité suivant l'une des revendications 1 à 5,
**caractérisé**
**en ce que** l'épaisseur du flanc (13) gauche de pénétration correspond à l'épaisseur du flanc (23) droit de pénétration ; et/ou
**en ce que** l'épaisseur du flanc (13) gauche d'étanchéité correspond à l'épaisseur du flanc (23) droit d'étanchéité ; et/ou
**en ce que** l'épaisseur de la partie (26) de serrage correspond à l'épaisseur du flanc (24) droit d'étanchéité ; et/ou
**en ce que** l'épaisseur de la partie la plus épaisse de la partie (25) de maintien correspond à l'épaisseur de la partie (26) de serrage.

7. Dispositif de combustion comprenant un conduit (32) gauche de gaz chaud et un conduit (33) droit de gaz chaud, qui (32, 33) conduisent respectivement un gaz de combustion chaud, dans lequel les conduits (32, 33) de gaz chaud sont disposés en étant voisins l'un de l'autre avec un intervalle (09) entre eux et ont, en regard l'un de l'autre, une rainure (34, 35) d'étanchéité gauche respective, dans lequel, dans l'intervalle (09) est disposé un joint (01) d'étanchéité suivant l'une des revendications précédentes, qui (01) pénètre dans les rainures (34, 35) d'étanchéité en regard l'une de l'autre.

8. Dispositif de combustion suivant la revendication 7,
**caractérisé**
**en ce que** la distance entre les fonds opposés des rainures (34, 35) d'étanchéité représente au moins 1,1 fois et au plus 1,5 fois la largeur du joint (01) d'étanchéité.

9. Dispositif de combustion suivant la revendication 7 ou 8,
**caractérisé**
**en ce que** la grandeur de la rainure (34) gauche d'étanchéité et de la rainure (35) droite d'étanchéité représente au moins 1,05 fois et au maximum 1,2 fois l'épaisseur du flanc (13) gauche de pénétration, respectivement du flanc (23) droit de pénétration.
